# EUROPEAN PATENT SPECIFICATION

(11) **EP 3 313 200 B1**
(45) Date of publication and mention of the grant of the patent: **03.04.2019**
(21) Application number: 16730425.2
(22) Date of filing: 22.06.2016
(51) Int. Cl.: A23L 23/00, A23L 23/10, A23L 27/20, A23L 27/10, A23L 27/00

(54) **(5R)-(SS-D-GLUCOPYRANOSYLOXY)-1,5-DIHYDRO-2H-PYRROL-2-ONE AS UMAMI MOLECULE**
(5R)-(SS-D-GLUCOPYRANOSYLOXY)-1,5-DIHYDRO-2H-PYRROL-2-ON ALS UMAMI-MOLEKÜL
(5R)-(SS-D-GLUCOPYRANNOSYLOXY)-1,5-DIHYDRO-2H-PYRROL-2-UN COMME MOLÉCULE UMAMI

(30) Priority: 24.06.2015 EP 15173646
(43) Date of publication of application: 02.05.2018
(73) Proprietor: Nestec S.A., 1800 Vevey (CH)
(72) Inventor: SCHOPP, Silke, 78315 Radolfzel (DE); MONTEIRO DE ARAUJO SILVA, Maria, 78224 Singen (DE)
(74) Representative: Dinger, Hansjörg
(86) International application number: PCT/EP2016/064334
(87) International publication number: WO 2016/207174

(56) References cited:
- WO-A1-2013/092296
- LIU T Y ET AL: "Isosuccinimide-beta-glucoside, the glucosyl donor in the synthesis of ethyl-beta-glucoside by pea seedling extracts", ARCHIVES OF BIOCHEMISTRY AND BIOPHYSICS, ACADEMIC PRESS, US, vol. 123, no. 3, 11 March 1968 (1968-03-11), pages 645-646, XP024753932, ISSN: 0003-9861, DOI: 10.1016/0003-9861(68)90188-4 [retrieved on 1968-03-11] cited in the application
- MIYAMOTO K ET AL: "Variation in content of dihydromaleimide and its glucoside in pea seedlings as affected by growth and red light", PLANT SCIENCE LETTERS, ELSEVIER SCIENCE PUBLISHERS LTD, LONDON, GB, vol. 37, no. 1-2, 1 November 1984 (1984-11-01), pages 47-51, XP025696674, ISSN: 0304-4211, DOI: 10.1016/0304-4211(84)90201-3 [retrieved on 1984-11-01] cited in the application
- BARYLKO-PIKIELNA ET AL: "Sensory interaction of umami substances with model food matrices and its hedonic effect", FOOD QUALITY AND PREFERENCE, LONGMAN SCIENTIFIC AND TECHNICAL, HARLOW, GB, vol. 18, no. 5, 3 April 2007 (2007-04-03), pages 751-758, XP022015400, ISSN: 0950-3293, DOI: 10.1016/J.FOODQUAL.2007.01.002 cited in the application

## Description

The present invention relates to the use of a composition for umami taste and/or flavor enhancing of a food product.

Many foods that are consumed today are rich in umami taste. Umami represents the taste of the amino acid L-glutamate and 5'-ribonucleotides such as guanosine 5'-monophosphate (GMP) and 5'-inosine monophosphate (IMP) and is sometimes also called the fifth taste. The word umami derives from the Japanese for delicious and the umami taste can be described as "savoury", "brothy" or "meaty" taste. The sensation of umami is due to the activation of taste receptor cells assembled into taste buds, distributed across different papillae of the tongue and the palate epithelium (Chandrashekar et al., 2006, Nature, 444, 288-294). Its effect is to balance taste and round out the overall flavor of a dish. Furthermore, umami enhances the palatability of a wide variety of food products. Naturally occurring glutamate can be found for example in many meat and vegetable food preparations (Ghirri et al., 2012, International Journal of Food Sciences and Nutrition, 63(7), 872-881.).

Umami or savoury, meaty taste of a food product can be further achieved and/or enhanced by adding separately monosodium glutamate (MSG) and/or the ribonucleotides GMP and IMP into those culinary recipes. Many taste enhancers comprising such MSG and/or ribonucleotides have been developed by the food industry and are available world-wide in the trade. A wide variety of ready-to-use taste enhancers are therefore available for various different culinary applications and in various different forms such as pastes, powders, liquids, compressed cubes or granules.

The addition of those culinary additives helps to provide deliciousness and enhanced taste appealing properties to food products to which they were added. Indeed, all around the world, deliciousness and appealing taste is perceived as one of the key attributes of a high quality meal. However, in many parts of the world, the addition of MSG and/or ribonucleotides has received bad press and is more and more negatively perceived by consumers. Although MSG and those ribonuleotides are naturally occurring in many food products, such as in tomatoes and meat products, and have been proven to be safe by several organizations including the World Health Organisation (WHO) and the European Food Safety Authority (EFSA), a publication in the New England Journal of Medecine (Kwok, RHM, 1968 New England Journal of Medecine, 278 (14), 796) sparked speculation among consumers about detrimental effects of MSG and ribonucleotides leading many consumers to reject products containing large amounts of such added compounds. There is therefore a strong need for industrial solutions allowing reducing the use of added MSG and ribonucleotides to food or taste enhancing products, without however compromising on umami taste and still ensuring savory superiority of such culinary products.

The applicant has explored extracts of plant materials, preferably green peas, for this purpose and found such extracts to be effective for umami taste and/or enhancing flavor. WO2013/092296 describes a process for preparing a flavour composition having an urnami flavour/taste and a MSG content of less than 1 wt% (% weight by total dry matter).

Although pea has been intensively studied (e.g. Jakobsen, H. B. et al. (1998) Aroma Volatiles of Blanched Green Peas (Pisum sativum L.); J. Agric. Food Chem. 46, 3727-3734), there has been almost no investigation into the enhancing flavour and/or umami properties of green pea.

Volatile compounds extracted from blanched and non-blanched peas have been compared (Barylko-Pikielna, N., Kostyra, E. (2007), Sensory interaction of umami substances with model food matrices and its hedonic effect; Food Quality and Preference, 18(5), 751-758). The umami intensity of pea soup has been evaluated (Maga, J. A. (1987) Organoleptic properties of umami substances; Food Science and Technology (New York, NY, United States), 20, 255-269). This study considered the possibility of enhancing pea flavour by adding MSG, but did not indicate any intrinsic umami taste of pea. Further, it was found that the addition of ribonucleotides decreased the umami intensity.

Different publications from Liu, Teh-Yung; Castelfranco, Paul A. (Archives of Biochemistry and Biophysics, Volume: 123, Issue: 3, Pages: 645-6, Journal, 1968), Miyamoto, K. (Plant Science Letters, 37 (1984) 47-51), Miyamoto, K. (Plant Growth Regulation, Volume: 11, Issue: 4, Pages: 411-17, Journal, 1992), Zemlyanukhin, A. A. (Biochemie und Physiologie der Pflanzen, Volume: 179, Issue: 8, Pages: 679-84, Journal, 1984) have been evaluated the role of isosuccinimide β-glucoside in the growing process of peas (pea sprouts). Therefore (5R)-(β-D-glucopyranosyloxy)-1,5-dihydro-2*H*-pyrrol-2-one is known as compound, especially from peas, but not as an umami and/or flavor enhancing compound.

### Summary of the invention

The object of the present invention is to improve the state of the art and to provide an alternative or improved solution to the prior art to overcome at least some of the inconveniences described above. Particularly, the object of the present invention is to provide an alternative or improved solution for umami taste and/or flavour enhancing of a food product, preferably for umami taste of a food product.

The object of the present invention is achieved by the subject matter of the independent claims. The dependent claims further develop the idea of the present invention.

Accordingly, the present invention provides in a first aspect use of (5R)-(β-D-glucopyranosyloxy)-1,5-dihydro-2*H*-pyrrol-2-one for umami taste and/or flavor enhancing of a food product, preferably for umami taste of a food product.

Still further aspects of the present invention relate to a use of a composition comprising (5R)-(β-D-glucopyranosyloxy)-1,5-dihydro-2*H*-pyrrol-2-one in an amount of at least 100ppm, preferably at least 150ppm, preferably at least 200ppm, preferably at least 250ppm, preferably at least 300ppm, preferably at least 350ppm, preferably at least 400ppm, more preferably at least 500ppm, between 100ppm and 2000ppm, between 150ppm and 2000ppm, preferably between 200ppm and 2000ppm, between 200ppm and 1000ppm, between 250ppm and 1000ppm, between 500ppm and 2000ppm, or between 500ppm and 1000ppm of the total composition for umami taste and/or flavor enhancing of a food product, preferably for umami taste of a food product.

The inventors surprisingly found that (5R)-(-β-D-glucopyranosyloxy)-1,5-dihydro-2*H*-pyrrol-2-one is providing an umami taste and/or flavor enhancing of a food product, preferably for umami taste of a food product. Evidence thereof is provided in the Example section below. It allows further reducing the amounts of MSG and/or ribonucleotides in culinary food products without compromising flavor richness and/or reducing the typical and well desired umami taste of said products. They also allow generating umami savory food concentrates which have much less or no MSG and/or ribonucleotides and still provide a strong and typical umami taste if applied to a food product. It even allows generating such umami savory food concentrates which are stronger and more concentrated in providing an umami taste to a food product upon application.

### Detailed Description of the invention

The present invention pertains to use of (5R)-(β-D-glucopyranosyloxy)-1,5-dihydro-2*H*-pyrrol-2-one for umami taste and/or flavor enhancing of a food product, preferably for umami taste of a food product. Such a food product may be a ready-to-eat food product. It may also be a flavor concentrate used for seasoning a still further other food product. Advantageously, (5R)-(β-D-glucopyranosyloxy)-1,5-dihydro-2*H*-pyrrol-2-one may be used for being added to a seasoning, a cooking aid or a food concentrate product. Thereby the strength of providing an umami taste to a still further food product is improved in such a seasoning, cooking aid or food concentrate product.

Further aspects of the present invention also relate to a use of a composition comprising (5R)-(β-D-glucopyranosyloxy)-1,5-dihydro-2*H*-pyrrol-2-one in an amount of at least 100ppm, preferably at least 150ppm, preferably at least 200ppm, preferably at least 250ppm, preferably at least 300ppm, preferably at least 350ppm, preferably at least 400ppm, more preferably at least 500ppm, between 100ppm and 2000ppm, between 150ppm and 2000ppm, preferably between 200ppm and 2000ppm, between 200ppm and 1000ppm, between 250ppm and 1000ppm, between 500ppm and 2000ppm, or between 500ppm and 1000ppm of the total composition, for umami taste and/or enhancing flavor of a food product, preferably for umami taste of a food product. Advantageously, such a food product may be a ready-to-eat food product.

Also provided is a method for umami taste and/or enhancing flavor of a culinary food product, preferably for umami taste of a food product, comprising the step of adding said compound or the composition comprising said compound to a food product. The food product can be a ready-to-eat food product or a flavor concentrate. The compound of the invention may inherently provide umami taste to a food, meaning that the compound itself has an umami taste. Alternatively or additionally, the compound may enhance the umami taste of a food, meaning that the compound may not have an umami taste itself but may bring out or increase the umami taste of a food that is provided by other compounds already existing in that food product.

As an example, the final concentration of said compound in the food product is at least 100ppm, preferably at least 150ppm, preferably at least 200ppm, preferably at least 250ppm, preferably at least 300ppm, preferably at least 350ppm, preferably at least 400ppm, more preferably at least 500ppm, between 100ppm and 2000ppm, between 150ppm and 2000ppm, preferably between 200ppm and 2000ppm, between 200ppm and 1000ppm, between 250ppm and 1000ppm, between 500ppm and 2000ppm, or between 500ppm and 1000ppm of the total composition. This advantageously, allows generating for example food seasoning products and flavor concentrate products which convey a strong umami taste to a further food product upon application.

(5R)-(β-D-glucopyranosyloxy)-1,5-dihydro-2*H*-pyrrol-2-one according to the present subject matter can be prepared as follows.

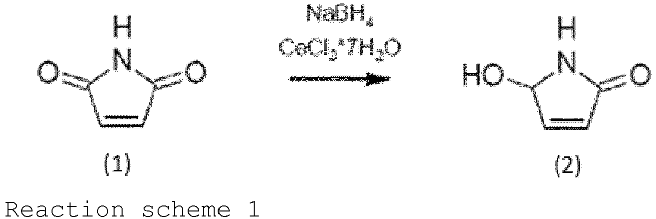

A compound of formula (2) can be obtained as shown in reaction scheme 1. Reaction of commercial available Maleimide (1) according to the procedure described in K. Takabe and coworkers, 2002, J. Chem. Soc., Perkin Trans. 1, 707-709 with NaBH4 and CeCl3 hydrate delivers a compound of formula (2).

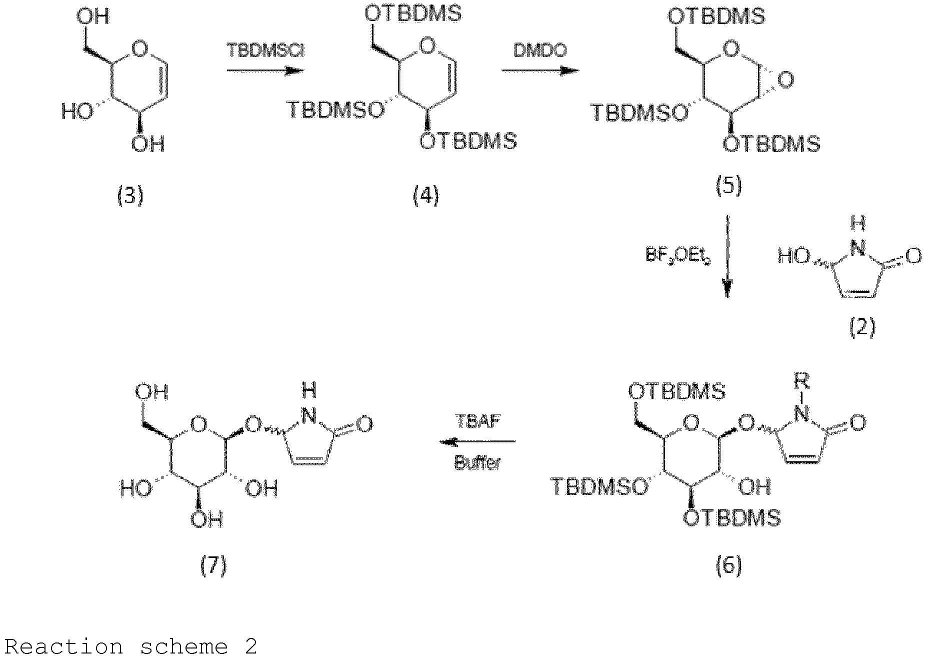

(5R)-(β-D-glucopyranosyloxy)-1,5-dihydro-2*H*-pyrrol-2-one (β-R) can be obtained as well as (5S)-(β-D-glucopyranosyloxy)-1,5-dihydro-2*H*-pyrrol-2-one (β-S), (5R)-(α-D-glucopyranosyloxy)-1,5-di-hydro-2*H*-pyrrol-2-one (α-R), (5S)-(α-D-glucopyranosyloxy)-1,5-dihydro-2*H*-pyrrol-2-one (α-S) as shown in reaction scheme 2.

Commercial available D-glucopyranosyl (3) was protected according to a procedure described in Shuto and coworkers, 2000, JOC, 65, 18, 5554 and J. Lellouche and S. Koeller, 2001, JOC, 66, 693-696 with a TBDMS-group to result a compound of formula (4) .

The epoxidation with DMDO according to the procedure described in R.L. Halomb und S.J. Danishefsky, 1989, JACS, 111, 6661-6666 leads to a compound of formula (5). The epoxide (5) can be reacted by a beta-selective glycosylation with aglycone (2) according to a procedure described in Halcomb and Danishefsky, 1989, JACS, 111, 17, 6661-6666 to yield a compound of formula (6) using boron trifluoride diethyl etherate as lewis acidic condition. The epoxide (5) can be also reacted by an alpha-selective glycosylation with aglycone (2) according to a procedure described in Halcomb and Danishefsky, 1989, JACS, 111, 17, 6661-6666 to yield a compound of formula (6) using zinc(II)-chloride solution as lewis acidic condition. The different diastereomers α-S, β-S, α-R and β-R can be separated by flash chromatography.

In the last step protective groups can be removed according to a procedure described in Y. Kaburagi and Y. Kishi, 2007, Org. Lett., 9, 4, 723-726 to yield a compound of formula (7) especially with the configuration α-S, β-S, α-R or β-R.

It is known to the person skilled in the art that, if there are a number of reactive centers on a starting or intermediate compound, it may be necessary to block one or more reactive centers temporarily by protective groups in order to allow a reaction to proceed specifically at the desired reaction center.

The compounds according to the present subject matter are isolated and purified in a manner known per se, e.g. by distilling off the solvent in vacuum and recrystallizing the residue obtained from a suitable solvent or subjecting them to one of the customary purification methods, such as column chromatography on a suitable support material.

Pure diastereomers and pure enantiomers of the compounds of formula (I) and the salts thereof can be obtained e.g. by asymmetric synthesis, by using chiral starting compounds in synthesis and/or by splitting up enantiomeric and diasteriomeric mixtures obtained in synthesis. Preferably, the pure diastereomeric and pure enantiomeric compounds of the present subject matter are obtainable by using chiral starting compounds in synthesis and/or by splitting up enantiomeric and diasteriomeric mixtures obtained in synthesis. Enantiomeric and diastereomeric mixtures can be split up into the pure enantiomers and pure diastereomers by methods known to a person skilled in the art. Preferably, diastereomeric mixtures are separated by crystallization, in particular fractional crystallization, or chromatography. Enantiomeric mixtures can be separated e.g. by forming diastereomers with a chiral auxiliary agent, resolving the diastereomers obtained and removing the chiral auxiliary agent. As chiral auxiliary agents, for example, chiral acids can be used to separate enantiomeric bases and chiral bases can be used to separate enantiomeric acids via formation of diastereomeric salts.

Furthermore, diastereomeric derivatives such as diastereomeric esters can be formed from enantiomeric mixtures of alcohols or enantiomeric mixtures of acids, respectively, using chiral acids or chiral alcohols, respectively, as chiral auxiliary agents. Additionally, diastereomeric complexes or diastereomeric clathrates may be used for separating enantiomeric mixtures. Alternatively, enantiomeric mixtures can be split up using chiral separating columns in chromatography. Another suitable method for the isolation of enantiomers is the enzymatic separation.

The following abbreviations are used: min: minutes, h: hour(s), DCM: dichloromethane, THF: tetrahydrofuran, EA: ethyl acetate, mp.: melting point, bp: boiling point, RT: room temperature (20 to 25°C), ambient temperature: 20 to 25°C, TLC: thin layer chromatography, 1H-NMR: 1H nuclear magnetic resonance spectroscopy (chemical shifts are reported as ppm against tetramethylsilane as internal standard, coupling constants J are reported in Hz). The chemical shifts (in ppm) were expressed with respect to an internal reference (TMS or TSP). Multiplicities are reported as follows: s= singlet, d= doublet, t= triplet, q= quatruplet, m= multiplet, ds= doublet of septet, bs= broad singlet.

### Example 1: 5-Hyroxy-1,5-dihydropyrrol-2-on (2) Reagents:

| **Name** | **Distributor /LOT** | **M [g/mol]** | **m/V** | **n [mmol] /eq** |
|---|---|---|---|---|
| Maleimide | Alfa Aesar 10178816 | 97,1 | 24,3 g | 250 mmol 1 eq |
| Cerium(III)-chloride | Alfa Aesar 61300246 | 372,6 | 93,2 g | 250 mmol 1 eq |
| Sodium borohydride | | 37,8 | 9,5 g | 250 mmol 1 eq |
| Methanol | | | 250 mL | |

### Procedure:

24,3 g Maleimide was dissolved in 250 mL Methanol and 93,2 g Cerium(III)-chloride heptahydrate was added and the reaction mixture was stirred for 5 min at rt. The colorless solution was cooled to 0°C and 9,5 g NaBH₄ was added in portions at 0°C (colorless suspension, foaming, exothermic, Duration: 3 h). The reaction mixture was stirred for 40 min at 0°C

125 mL ice water was added and the solvent was removed under reduced pressure to dryness below 40°C. The residue was extracted with methanol; the filtrate was treated with activated charcoal and filtered through a plug of silica (washed with methanol).

Evaporation of the solvent under reduced pressure below 40°C resulted in a black oil (coal residues).

Column chromatography (silica60, CH₂Cl₂/MeOH 10/1) yielded 20,0 g colorless solid

### Yield: 81 %

### Analytics:

Tlc: R_{F} (product) = 0,24 (silica60); CH₂Cl₂/MeOH 10/1 v/v; UV₂₅₄ Melting point: 99-101 °C
1H-NMR (500 MHz, MeOD) δ: 7,04 (1H, d), 6,05 (1H, d), 5,59 (1H, d)

### Example 2: 3,4,6-tri-O-TBDMS-D-glucal (4)

### Reagents:

| **Name** | **Distributor/ LOT** | **M [g/mol]** | **m/V** | **n [mmol] /eq** |
|---|---|---|---|---|
| D-glucal | | 146,1 | 35,1 g | 240 mmol |
| tert-Butyldimethylsilylc | | 150,7 | 181 g | 1200 mmol |
| Imidazole | Alfa Aesar | 68,1 | 163 g | 2400 mmol |
| DMF, dry | | | 960 mL | |

### Procedure:

35,1 g D-glucal was dissolved in 640 mL dry DMF, than 163 g imidazole was added followed by the addition of 181 g tBDMSCl. 320 mL dry DMF was used to rinse glassware into the reaction flask (yellow solution). The reaction mixture was stirred at 60°C for 18 h (tlc). The reaction mixture was poured into 160 mL of water and was extracted with diethylether (3x350 mL). The organic phase was washed with water (3x350 mL) and finally dried with Na₂SO₄. The filtered suspension was evaporated under vacuum. Mass = 141 g colorless liquid.

The residue was purified with column chromatography (silica60, cyclohexane/dichloromethane) Mass product fraction = 120,9 g colorless oil

### Yield: quantitative

### Analytics:

Tlc: R_{F}(product) = 0,4; R_{F}(glucal) = 0; silica60, cyclohexane/CH₂Cl₂ 3/1; Hanessian's stain
¹H-NMR (400 MHz, CDCl₃) δ: 6,32 (1H, dd), 4,69 (1H, ddd), 3,99 (1H, dtd), 3,93 (1H, dd), 3,90-3,87 (1H, m), 3,79 (1H, td), 3,76 (1H, dd), 0,90 (9H, s), 0,89 (18H, ds), 0,10 (6H, s), 0,08 (6H, ds), 0,06 (6H, ds)
¹³C-NMR (101 MHz, CDCl₃) δ: 143,1, 101,5, 80,2, 70,4, 66,9, 61,9, 26,1, 26,0 (2C), 18,6, 18,2,18,1, -4,1, -4,2, -4,3, -4,6, -5,0, -5,1

### Example 3: 1,2-Anhydro-3,4,6-tri-O-TBDMS-α-D-glucopyranose (5)

### Reagents:

| **Name** | **Distributor** | **M** | **m/V** | **n** |
|---|---|---|---|---|
| 3,4,6-tri-O-tert-butyldimethylsilyl-D-glucal | | 488,9 | 13,6 g | 27,8 mmol 1 eq |
| DMDO-Lsg. in acetone ca. 0,05 mmol/L | | | 645 mL | ca. 32 mmol |
| Dichloromethan, dry | | | 350 mL | |

### Procedure:

13,6 g glucal were dissolved in 350 mL dry CH₂Cl₂. The solution was cooled to 0°C in an ice- bath. 645 mL ice cold DMDO-solution (-20°C) were added to the stirred solution at once. The reaction mixture was stirred at 0°C for 20 min, tlc (silica60; cyclohexane/dichloromethane 3/1 v/v; Hanessian's stain): complete conversion. The solvent was evaporated at T < 25°C (water aspirator + stream of argon). Water was removed manually by means of a dropper, than the product was dissolved in CH₂Cl₂ and dried with Na₂SO₄. After Filtration the solvent was removed under reduced pressure below 25°C. 14 g colorless oil. The crude product was immediately used within the next reaction step.

### Yield: quantitative

### Analysis:

Tlc: R_{F}(product) = 0; R_{F}(TBDMS-glucal) = 0,4; silica60; cyclohexane/CH₂Cl₂ 3/1; Hanessian's stain
¹H-NMR (400 MHz, CDCl₃) δ: 4,89 (1H, d), 3,95 (1H, dd), 3,78-7,76 (2H, m), 3,55-3,45 (2H, m), 2,91 (1H, dd), 0,95 (9H, s), 0,89 (18H, ds), 0,20 (6H, s), 0,14 (3H, s), 0,10 (3H, s) 0,07 (3H, s), 0,01 (3H, s)

### Example 4: 5-(3,4,6-tri-O-TBDMS-D-glucopyranosyloxy)-1,5-dihydro-2H-pyrrol-2-one (6)

### Reagents:

| **Name** | **Distributor** | **M** | **m/V** | **n** |
|---|---|---|---|---|
| 1,2-Anhydro-3,4,6-tri-O-tert-butydimethyls ilyl-α-D-glucopyranose | | 504,9 | 14,0 g | 27,7 mmol 1 eq |
| 5-hydroxy-1,5-dihydro-2*H*-pyrrol- | | 99,1 | 3,43 g | 34,6 mmol |
| Boron trifluoride diethyl etherate | | 141,9 | 4,44 mL | 36,0 mmol |
| THF, dry | Applichem | | 250 mL | |

### Procedure:

14,0 g epoxide were dissolved in 200 mL dry THF, than 3,43 g aglycone were added at RT. The solution was cooled to -78°C, than 4,44 mL BF₃OEt was added via a disposable syringe. The mixture was stirred at -78°C for 1 h, than slowly warmed to-50°C and stirred for 15 min. The solution was again cooled to < -65°C and 30 mL saturated NaHCO₃-solution was added at this temperature. The mixture was allowed to warm to -20°C and the reaction mixture was poured into 140 mL saturated NaHCO₃-solution, 140 mL water and 100 ml ethyl acetate. The organic layer was separated and the water phase extracted with ethyl acetate (2x40 mL). The combined organic phases were washed with brine und dried with Na₂SO₄. After filtration, the solvent was evaporated. The oily residue (13,7 g) was purified by flash chromatography (silica60; cyclohexane/ethylacetate 3/1).
Fraction A = 2,58 g
Fraction A/B = 3,07 g
Fraction B = 2,70 g

Fraction A and B again separately purified by flash chromatography (silica60; cyclohexane/ethylacetate 3/1).
Fraction A1 = 1,36 g α-S, yield = 8 %
Fraction A2 = 1,07 g β-S, yield = 6 %
Fraction B1 = 1,18 g β-R, yield = 7 %
Fraction B2 = 0,66 g α-R, yield = 4 %

### Analytics:

### α-S:

¹H-NMR (500 MHz, CDCl₃) δ: 7,17 (1H, bs), 6,94 (1H, d), 6,14 (1H, d), 5,54 (1H, d), 5,08 (1H, d), 3,96-3,93 (2H, m), 3,79 (1H, dt), 3,67 (1H, t), 3,53 (1H, m), 3,42 (1H, t), 2,40 (1H, d), 1,56-1,25 (9H, m), 0,94-0,87 (18H, m), 0,16-0,10 (18H, m)

### α-R:

¹H-NMR (500 MHz, CDCl₃) δ: 7,15 (1H, d), 6,40 (1H, bs), 6,13 (1H, d), 5,81 (1H, d), 5,04 (1H, d), 3,91-3,88 (2H, m), 3,81 (1H, m), 3,67 (1H, dt), 3,55-3,53 (2H, m), 3,00 (1H, d), 1,56-1,25 (9H, m), 0,93-0,87 (18H, m), 0,14-0,10 (18H, m)

### β-S (natural inversed)

¹H-NMR (500 MHz, CDCl₃) δ: 7,01 (1H, d), 6,74 (1H, bs), 6,18 (1H, d), 5,80 (1H, s), 4,84 (1H, d), 3,99 (1H, dd), 3,91 (1H, dd), 3,67 (1H, t), 3,85 (1H, t), 3,82 (1H, t), 3,75 (1H, m), 3,50 (1H, t), 2,62 (1H, b), 0,98-0,94 (27H, m), 0,19-0,11 (18H, m)

### β-R (natural identical)

¹H-NMR (500 MHz, CDCl₃) δ: 6,97 (1H, d), 6,78 (1H, bs), 6,13 (1H, d), 5,55 (1H, s), 4,80 (1H, d), 3,91 (1H, dd), 3,83 (1H, dd), 3,78 (1H, t), 3,69 (2H, m), 3,49 (1H, t), 2,52 (1H, b), 0,94-0,89 (27H, m), 0,15-0,10 (18H, m)

### Example 5: 5-(α-D-glucopyranosyl)-dihydromaleimide (7)

### Reagents:

| **Name** | **Distributor /LOT** | **M [g/mol]** | **m/V** | **n [mmol]/eq** |
|---|---|---|---|---|
| 5-(3,4,6-Tri-O-TBDMS-D-glucopyranosyl)-dihydromaleimid | | 604,0 | 1000 mg | 1,66 mmol 1 eq |
| Tetra-n-butylammonium fluoride in THF 1 M | Alfa Aesar | | 10 mL | 9,93 mmol 6 eq |
| THF, dry | | | 40 mL | |
| Calcium carbonate | | | 2,7 g | |
| Dowex 50WX8 | | | 8,3 g | |
| Methanol | | | 20 mL | |

### Procedure:

To 1000 mg starting material was added 10 mL TBAF in THF 1 M at RT. The reaction mixture was stirred 30 minutes, then diluted with 40 mL dry THF. The reaction mixture was stirred for 2 h at rt, while monitored every 15 min by tlc (silica60 CHCl₃/MeOH 4/1 and 2/1 v/v). A trace of glucose indicated the end of the reaction.

To the reaction mixture were added 2,7 g CaCO₃, 8,3 g Dowex 50WX8 and 20 mL MeOH. The suspension was stirred for 30 min, filtered through a pad of celite and washed with MeOH. Evaporation of the solvent yielded 0,6 g brown solid. Purification with SC (silica60, CHCl₃/MeOH 7/2) yielded 135 mg pure product plus 60 mg impure fraction with glucose.

### Yield: 30%

### Analytics:

### α-S:

¹H-NMR (500 MHz, MeOD) δ: 7,19 (1H, d), 6,10 (1H, d), 5,68 (1H, s), 5,04 (1H, d), 3,90 (1H, d), 3,74 (1H, dt), 3,65-3,57 (2H, m), 3,44 (1H, dd), 3,24 (1H, dt)

### Diastereomer obtained from the deprotection of Lower Spot α-R:

¹H-NMR (500 MHz, MeOD) δ: 7,19 (1H, d), 6,12 (1H, d), 5,73 (1H, s), 5,07 (1H, d), 3,88-3,83 (1H, m), 3,70-3,58 (3H, m), 3,42 (1H, dd), 3,28 (1H, dt)

### Example 6: 5R-(β-D-glucopyranosyl)-dihydromaleimide (7)

### Reagents:

| **Name** | **Distributor/ LOT** | **M [g/mol]** | **m/V** | **n [mmol]/eq** |
|---|---|---|---|---|
| 5R-(3,4,6-Tri-O-TBDMS-β-D-glucopyranosyl)-dihydromaleimid | | 604,0 | 1,5 g | 2,48 mmol 1 eq |
| Tetra-n-butylammonium fluoride in | Alfa Aesar | | 14,9 mL | 14,9 mmol 6 eq |
| Acetic acid | | 60,1 | 896 mg | 14,9 mmol |
| THF, dry | | | 150 mL | |

### Procedure:

1,5 g protected glucoside was dissolved in 100 mL dry THF. 14,9 TBAF solution 1 M in THF was diluted with 25 mL dry THF and 0,896 mg acetic acid was added. This buffered mixture was added in one portion (The flask was rinsed with 25 mL dry THF). The reaction mixture was stirred overnight, than the solvent was concentrated under vacuum to 1/10 of its original volume (T < 40°C).

The residue was purified by column chromatography (silica60, THF/H₂O 99/1). 460 mg light brown powder was isolated.

### Yield: 71 %

### Analytics:

### β-R

Tlc: R_{F}(product) = 0,1; R_{F}(intermediate) = 0,5; R_{F}(starting material) > 0,9; silica60; CHCl₃/MeOH 4/1; Hanessian's stain
NMR-1H, 500MHz in D2O/MeOD (ppm): 3,3-3,5 (m, teilweise von MeOH überlagert, H-2, H-3, H-4, H- 5); 3,75 (m, 1H, H-6A); 3,95 (m, 1H, H-6B); $,60 (d, 1H, H-1, J 1/2 = 7,9 Hz); 5,85 (s, 1H, H-7); 6,23 (d, 1H, H-9, J 8/9 = 5,7Hz); 7,28 (d, 1H, H-8, J 8/9 = 5,7Hz).

### Diastereomer obtained from the deprotection of β-S

NMR-1H, 500MHz in MeOD (ppm): 3,2 (dd, 1H, H-2, J1/2 = 7,8Hz, J 2/3 = 9Hz); 3,27 (dd, 1H, H-3, J 2/3 = 9Hz, J 3/4 = 9,5Hz); 3,32 (m, 1H, H-5); 3,36 (t, 1H, H-4, J 3/4 = 9,5Hz, J 4/5 = 9,5Hz); 3,66 (dd, 1H, H-6A, J 5/6A = 6Hz, J 6A/6B = 11,8Hz); 3,89 (dd, 1H, H6B, J 5/6B =2,3Hz, J 6A/6B = 11,8Hz); 4,48 (d, 1H, H-1, J 1/2 = 7,8Hz); 5,83 (dd, 1H, H-7, J 7/8 = 1,5Hz, J 7/9 = 1Hz); 6,08 (dd, 1H, H-9, J 7/9 =1Hz, J 8/9 = 6Hz); 7,13 (dd, 1H, H-8, J 7/8 = 1Hz, J 8/9 = 6Hz).

### Example 7: Sensory evaluation of (5R)-(β-D-glucopyranosyloxy)-1,5-dihydro-2H-pyrrol-2-one

The sensory tests were performed in a sensory panel room at 20-25°C. The sensory panel consisted of 5 to 8 trained persons. The technical tasting was measured versus a control sample. Tasters were asked to judge the different products according to umami intensity on a 3-point scale (no umami, umami and intense umami) . Additionally the tasters were asked to objectively describe the prototype with comments.

**Table 1: Tasting in water**

| C; mg/l | No umami | Umami | Intense umami | comments |
|---|---|---|---|---|
| 100 | 5 | 3 | 0 | Mouthfulness, round |
| 250 | 3 | 4 | 1 | roundness |
| 500 | 1 | 6 | 1 | Umami, roundness |

Table 1 shows a threshold of (5R)-(β-D-glucopyranosyloxy)-1,5-dihydro-2*H*-pyrrol-2-one at a concentration of 250 mg/l which is corresponding to 957 µmol/l, preferably at a concentration of 500 mg/l which is corresponding to 1914 µmol/l. Monosodium glutamat (MSG) has a threshold of 1500 µmol/l.

**Table 2: Tasting in 0.2% sodium chloride and 0.04% sugar**

| C; mg/l | No umami | Umami | Intense umami | comments |
|---|---|---|---|---|
| 0 | 6 | 1 | 0 | sweet |
| 200 | 3 | 4 | 0 | Sweet, watery |
| 500 | 2 | 3 | 2 | More round, more sweet |

**Table 3: Tasting in 0.2% sodium chloride and 0.04% sugar and 0.08% MSG**

| C; mg/l | No umami | Umami | Intense umami | comments |
|---|---|---|---|---|
| 0 | 4 | 2 | 0 | Umami, sweet |
| 200 | 0 | 1 | 5 | Chicken-like, round |
| 500 | 0 | 3 | 3 | Round, mouthful, artificial |

**Table 4: Tasting in 0.2% sodium chloride and 0.04% sugar and 0.015% IMP+GMP**

| C; mg/l | No umami | Umami | Intense umami | comments |
|---|---|---|---|---|
| 0 | 6 | 1 | 0 | - |
| 200 | 4 | 3 | 0 | Broth-like, salivating |
| 500 | 3 | 4 | 0 | Round, different to reference |

Table 2, table 3 and table 4 shows the umami enhancing property of the (5R)-(β-D-glucopyranosyloxy)-1,5-dihydro-2*H*-pyrrol-2-one.

### Example 8: Comparative examples with the stereoisomers of (5R)-(β-D-glucopyranosyloxy)-1,5-dihydro-2H-pyrrol-2-one

The stereoisomers have been tested to umami intensity as described in example 7.

**Table 5: Tasting of (5R)-(α-D-glucopyranosyloxy)-1,5-di-hydro-2H-pyrrol-2-one (alpha-R) in water**

| C; mg/l | No umami | Umami | Intense umami | comments |
|---|---|---|---|---|
| 200 | 5 | 0 | 0 | Bitter, astringent |
| 400 | 5 | 0 | 0 | Very bitter, chemical |
| 800 | 5 | 0 | 0 | chemical |

**Table 6: Tasting of (5S)-(α-D-glucopyranosyl-oxy)-1,5-dihydro-2H-pyrrol-2-one (alpha-S) in water**

| C; mg/l | No umami | Umami | Intense umami | comments |
|---|---|---|---|---|
| 100 | 5 | 0 | 0 | chemical, astringent |
| 250 | 4 | 1 | 0 | More salty |
| 500 | 5 | 0 | 0 | Metallic, bitter |

**Table 7: Tasting of (5S)-(β-D-glucopyranosyloxy)-1,5-dihydro-2H-pyrrol-2-one (beta-S) in water**

| C; mg/l | No umami | Umami | Intense umami | comments |
|---|---|---|---|---|
| 100 | 5 | 0 | 0 | - |
| 200 | 5 | 0 | 0 | bitter |
| 500 | 4 | 1 | 0 | Pungent, desinfectant |

None of the stereoisomers of (5R)-(β-D-glucopyranosyloxy)-1,5-dihydro-2*H*-pyrrol-2-one have been shown an umami intensity in water at any concentration.

### Example 9: Seasoning compositions

Tomato soups were prepared by dissolving in 6 g tomato base powder (detailed recipe shown in the Table 8) in 500 mL hot water. (5R)-(β-D-glucopyranosyloxy)-1,5-dihydro-2*H*-pyrrol-2-one was added at 500 mg/L (500ppm) to the soups.

**Table 8: Composition of tomato soup powder**

| Ingredient | Quantity (wt%) |
|---|---|
| Yeast extract | 1.8 |
| White Sugar | 17.5 |
| Flavors | 31.5 |
| Tomato powder | 1.5 |
| Wheat flour | 28 |
| Corn starch | 12.5 |
| Guar gum | 0.6 |
| Spices powder | 3.6 |
| Maltodextrine | 1.9 |
| Sunflower oil | 1.1 |
| Total | 100% |

The sensory panel concluded that tomato soups with and without the (5R)-(β-D-glucopyranosyloxy)-1,5-dihydro-2*H*-pyrrol-2-one were perceived as significantly different; and the addition of (5R)-(β-D-glucopyranosyloxy)-1,5-dihydro-2*H*-pyrrol-2-one in an amount of 500ppm increased significantly the savory, umami taste of those soups.

## Claims

1. Use of (5R)-(β-D-glucopyranosyloxy)-1,5-dihydro-2*H*-pyrrol-2-one for umami taste and/or flavor enhancing of a food product.

2. Use of (5R)-(β-D-glucopyranosyloxy)-1,5-dihydro-2*H*-pyrrol-2-one according to claim 1 in an amount of at least 200ppm, preferably at least 250ppm.

3. Use of (5R)-(β-D-glucopyranosyloxy)-1,5-dihydro-2*H*-pyrrol-2-one according to one of the claim 2-3, wherein (5R)-(β-D-glucopyranosyloxy)-1,5-dihydro-2*H*-pyrrol-2-one is an extract from plant material.

4. The use according to claim 3, wherein the plant material is selected from pea, beans, corn, tomato, soybean, wheat, onions, or beetroot, preferably pea.

## Patentansprüche

1. Verwendung von (5R)-(β-D-Glucopyranosyloxy)-1,5-dihydro-2*H*-pyrrol-2-on für Umami-Geschmack und/oder Geschmacksverstärkung eines Nahrungsmittelprodukts.

2. Verwendung von (5R)-(β-D-Glucopyranosyloxy)-1,5-dihydro-2*H*-pyrrol-2-on nach Anspruch 1 in einer Menge von mindestens 200 ppm, vorzugsweise mindestens 250 ppm.

3. Verwendung von (5R)-(β-D-Glucopyranosyloxy)-1,5-dihydro-2*H*-pyrrol-2-on nach einem der Ansprüche 2 bis 3, wobei (5R)-(β-D-Glucopyranosyloxy)-1,5-dihydro-2*H*-pyrrol-2-on ein Extrakt aus Pflanzenmaterial ist.

4. Verwendung nach Anspruch 3, wobei das Pflanzenmaterial aus Erbse, Bohnen, Mais, Tomate, Sojabohne, Weizen, Zwiebeln oder Roter Beete ausgewählt ist, vorzugsweise Erbse.

## Revendications

1. Utilisation de (5R)-(β-D-glucopyranosyloxy)-1,5-dihydro-2*H*-pyrrol-2-one pour renforcer le goût umami et/ou la saveur d'un produit alimentaire.

2. Utilisation de (5R)-(β-D-glucopyranosyloxy)-1,5-dihydro-2*H*-pyrrol-2-one selon la revendication 1 en une quantité d'au moins 200 ppm, de préférence au moins 250 ppm.

3. Utilisation de (5R)-(β-D-glucopyranosyloxy)-1,5-dihydro-2*H*-pyrrol-2-one selon l'une parmi la revendication 2 ou 3, dans laquelle la (5R)-(β-D-glucopyranosyloxy)-1,5-dihydro-2*H*-pyrrol-2-one est un extrait d'une matière végétale.

4. Utilisation selon la revendication 3, dans laquelle la matière végétale est choisie parmi pois, fèves, maïs, tomate, soja, blé, oignons ou betterave, de préférence pois.
